# EUROPEAN PATENT APPLICATION

(11) **EP 2 314 543 A1**
(43) Date of publication of application: **27.04.2011**
(21) Application number: 09173829.4
(22) Date of filing: 22.10.2009
(51) Int. Cl.: C01B 3/38, B01J 8/06

(54) **Method for reducing the capacity of a steam reformer and reduced-capacity reformer**

(71) Applicant: L'AIR LIQUIDE, SOCIETE ANONYME POUR L'ETUDE ET L'EXPLOITATION DES PROCEDES GEORGES CLAUDE, 75007 Paris (FR); Air Liquide Deutschland GmbH, 40235 Düsseldorf (DE)
(72) Inventor: Jakob, Jürgen, 40235, DÜSSELDORF (DE); Wentink, Paul, 78810, FEUCHEROLLES (FR)
(74) Representative: Conan, Philippe Claude

(57) **Abstract**

The invention relates to a method for reducing the capacity of a steam reforming furnace in an installation producing a syngas by catalytic steam reforming of light hydrocarbons, comprising at least one combustion chamber having at least four vertical walls (1 to 4) made of refractory material facing each other in pairs, N tubes in at least one row of vertically aligned reforming tubes (6) between the two facing vertical side walls (1 and 3), at least some burners and at least one combustion gas discharge outlet.
According to the invention, an additional wall (9) made of refractory material perpendicular to the side walls (1 and 3) is installed so as to separate the combustion chamber into two zones A and B.

## Description

The present invention relates to a method for reducing the capacity of a steam reforming furnace of an installation intended to produce a syngas by catalytic steam reforming of a light hydrocarbon feed.

The process of steam hydrocarbon reforming, commonly denoted by SMR ("steam methane reforming"), employs a reforming operation that produces hydrogen and carbon monoxide from hydrocarbons, generally natural gas (NG), and steam. This reforming requires a large heat influx because of its highly endothermic character. For this purpose, the hydrocarbons and the steam are introduced into reforming tubes filled with catalysts, said tubes being placed in a furnace. At the outlet of the tubes, a mixture composed predominantly of H₂ and CO, called synthesis gas or syngas, is obtained.

The furnace comprises a combustion chamber (or possibly several combustion chambers) consisting of refractory walls and burners. The burners may be placed on two of the vertical walls of the combustion chamber, said walls, also called side walls, facing one another - this type of furnace is referred to as a "side-fired" furnace. The burners may also be fitted in the roof of the furnace, the furnace then being called a "top-fired" furnace.

The burners are placed so as to transfer the heat of their combustion to the mixture of hydrocarbons and steam through the wall of the tubes, generally by radiation of the heat from the flame on the refractory walls of the combustion chamber.

The present invention relates both to top-fired furnaces and to side-fired furnaces.

In a combustion chamber, the reforming tubes are arranged in rows. In side-fired furnaces, they are arranged so as to be parallel to the side walls bearing the burners, at mid-distance between said walls. The combustion gases or flue gases are discharged from the combustion chamber at the top of only one of the side walls.

In top-fired furnaces, the rows of tubes are arranged so as to be parallel to the two side walls, and the burners are distributed in the roof in line with the rows of tubes and between the rows of tubes. The combustion gases or flue gases are discharged from the combustion chamber at one of the walls, which is located at the end of the rows, perpendicular thereto; the flue gases are discharged in the bottom part.

Since the production of syngas is often one step in the production of an end product, the capacity of the installation is therefore expressed in this case as a function of the end product (for example hydrogen). The installation for producing syngas by catalytic steam reforming of a hydrocarbon feed is designed and sized, and therefore effective, for a given production level. The entire installation intended to deliver the end product is sized for this given production level - which therefore defines the maximum capacity of the installation - but it is the SMR unit, and more precisely the reforming furnace, that determines the efficiency of the installation.

It is when operating at its maximum capacity that the installation is most efficient - reducing its production necessarily results in a reduction in its efficiency. Efficiency is determined by the consumption of natural gas (feed plus fuel) of the installation relative to the end product.

Let us consider as an example the case of syngas production intended for producing hydrogen as end product. The unit was designed with a design capacity (maximum capacity) of 6500 Nm³/h of hydrogen. The use of the reformer at 100% of its capacity corresponds to a natural gas consumption of 4.4 kW/H₂, the use of the same reformer for a production corresponding to 40% of its capacity (2600 Nm³/h H₂) results in a consumption of 5.2 kW/H₂, whereas its use at 10% of its capacity (650 Nm³/h H₂) would result in a consumption of 9 kW/H₂.

Thus, the loss of efficiency of the installation not operating at 100% of its capacity progressively increases when the amount of hydrogen produced is progressively decreased. A certain loss of efficiency may be acceptable, but if the production capacity has to be reduced by more than 30%, its operation is not considered to be commercially viable.

Thus, the manufacturer who today has to lower his production to a level below 30% of its prior production level has at the present time no satisfactory solution - he must accept the loss of efficiency or else install two units so as to be able to meet variable demands. This requires significant investment.

There therefore exists a need to reduce the capacity of a reforming unit when a lower demand - for syngas or end product - leads to it being operated at reduced capacity.

More broadly, there is a need to modulate the capacity of a syngas production installation in such a way that it can be adapted so as to respond to a lower demand or to respond to an increase in production, for a reasonable investment.

The present invention aims at providing a solution for reducing the production capacity of an SMR unit to less than 30% of its capacity, this reduction in capacity possibly reaching 10% of the initial capacity or even less, with a minimal, and in all cases acceptable, loss of efficiency.

The solution provided by the invention consists in installing an additional wall made of refractory material in the reformer, thus separating it into two separate zones and enabling operation to be limited to one zone of the furnace.

The invention thus relates to a method for reducing the capacity of a steam reforming furnace in an installation producing a syngas by catalytic steam reforming of light hydrocarbons, comprising:
- at least one combustion chamber having at least four vertical walls 1 to 4 made of refractory material facing each other in pairs;
- N tubes forming at least one row of vertically aligned reforming tubes 6 between the two facing vertical side walls 1 and 3, said tubes being filled with reforming catalyst and being capable of making a mixture containing the hydrocarbon feed and steam flow from the top down so as to recover a raw syngas at the bottom of the tubes;
- burners 7, said burners being supplied with fuel and with oxidizer; and
- at least one outlet duct 5 for discharging the gases resulting from said combustion,
   **characterized in that** an additional wall 9 made of refractory material perpendicular to the side walls 1 and 3 is installed so as to separate the combustion chamber into two zones A and B, the zone A of which is provided with:
- N_{A} tubes in at least one row of reforming tubes, where N_{A} < N;
- at least some of the burners 7; and
- at least one gas discharge outlet duct 5, and said zone A has a reduced syngas production capacity.

Thus, to reduce the production of syngas intended for example for a reduced final production of hydrogen, a reforming unit of reduced capacity according to the invention will be supplied via a hydrocarbon feed which is itself reduced compared with the design feed.

Dividing the combustion chamber of the furnace in this way has several advantages:
- the volume to be heated is decreased and therefore the heat losses are avoided;
- the number of tubes used to produce the syngas is reduced, as is therefore the consumption; and
- the reduction in the number of tubes combined with a decrease in volume to be heated (reduced to zone A of the chamber) makes it possible to carry out the process under conditions close to those for treating a complete feed in a suitably sized installation, although the feed is only partial, and to achieve, for a feed which is for example only 10% of the complete (or design) feed, an efficiency comparable to that which would be obtained with a 40% feed without modifying the reformer. A few minor adaptations will have to be carried out on the installation, these being within the competence of a person skilled in the art. For example, it will be necessary to make modifications of the burner adjustment, process gas boiler tube plugging, reformer wall and tube insulation type.

The method of the invention may comprise one or more of the following features:
- the additional wall occupies the place of one tube per row. Thus, one tube per row is removed so as to install the wall made of refractory material. Thus, if the furnace is of the side-fired type, having one row of tubes, one tube is removed so as to install the wall. If the furnace is of the top-fired type, having two rows of parallel tubes, two adjacent tubes will be removed (one tube from each row) in order to install the wall;
- one tube per row is removed in order to replace it with supports capable of adapting said additional wall thereto. The removed tubes are replaced with supports capable of adapting said wall; thus just as in the case in which the tubes are attached via their upper end, the wall is itself also attached via its upper end, the weight of this additional wall therefore being supported in the same way as the catalyst-filled tubes for which it is substituted;

- the additional wall uses at least some of the tubes for which it substitutes as support capable of holding it in place. Some tubes are used as support, the weight of the additional wall being supported in the same way as a filled tube; this makes it possible to remove the wall when the capacity has to be increased in order to meet an increase in demand; and
- the capacity of the furnace may be partially restored by removing the wall; it will also be possible to replace tubes so as to restore the maximum capacity of the furnace; and it will also be possible to move the wall so as to define two new zones different from the two zones A and B.

The invention may be incorporated into the design of new syngas production units. Thus, it will be possible right from the start to install a reformer provided with a combustion chamber divided into two zones A and B according to the invention, said reformer being intended for a production that is initially limited but that it is known will have to substantially or even greatly increase.

According to a second aspect of the invention, this relates to a syngas production installation comprising a furnace for catalytic steam reforming of light hydrocarbons for the production of syngas and the capacity C of which is determined for a given production P of an end product, comprising:
- at least one combustion chamber having at least four vertical walls 1 to 4 made of refractory material facing one another in pairs;
- N tubes forming at least one row of vertically aligned reforming tubes 6 between the two facing vertical side walls 1 and 3, which tubes are filled with reforming catalyst and are capable of making a mixture containing the hydrocarbon feed and steam flow from the top down so as to recover a raw syngas at the bottom of the tubes;

- burners 7, said burners being supplied with fuel and with oxidizer;
- at least one outlet duct 5 for discharging the gases coming from said combustion,
   **characterized in that** it has, in the combustion chamber, an additional wall 9 made of refractory material perpendicular to the side walls 1 and 3 so as to separate the combustion chamber into two zones A and B, the zone A of which is provided with:
- N tubes in at least one row of reforming tubes, where N_{A} < N;
- at least some burners; and
- at least one gas discharge outlet duct 5, so that, by using said zone A alone as reforming furnace, the production capacity of the installation is reduced to a capacity CA less than the capacity C.

Preferably, the number of tubes N_{A} is between 3N/5 and N/3.

Finally, the invention relates to the use of a reduced-capacity installation as described above for reduced production of an end product P from a reduced hydrocarbon feed HC.

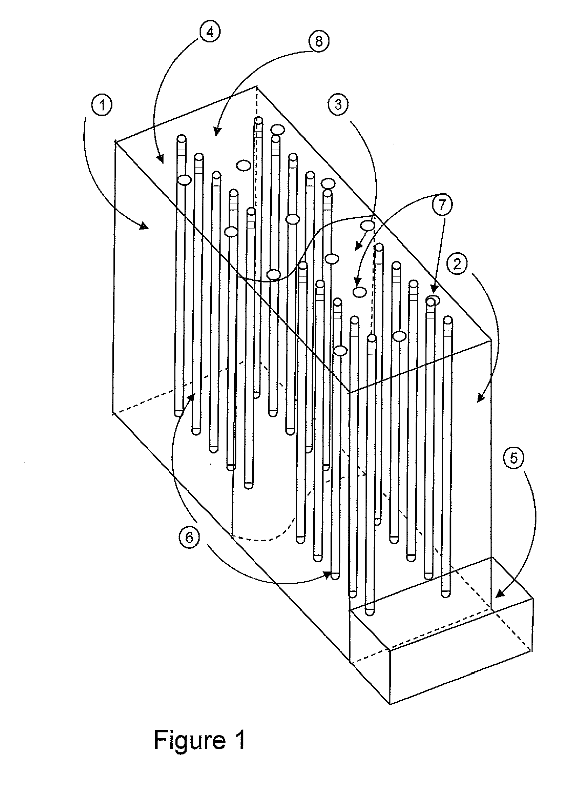

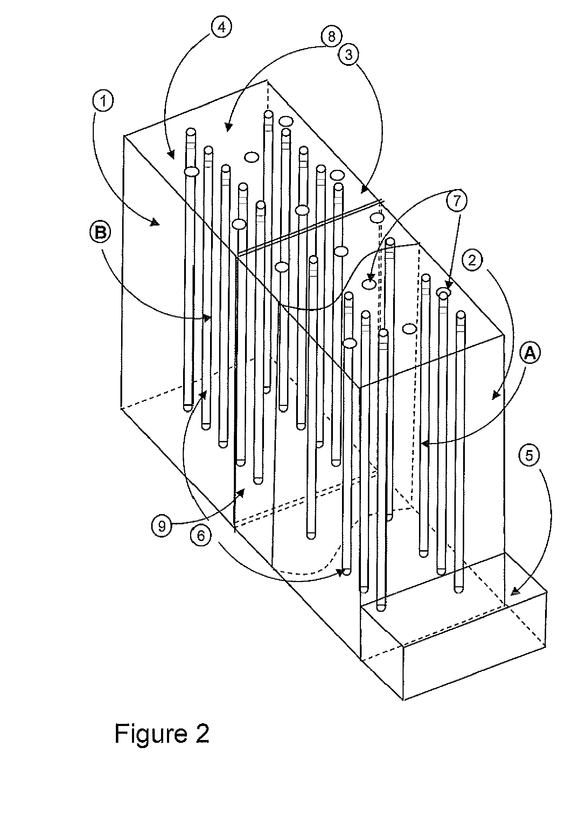

The invention will now be described in conjunction with Figures 1 and 2 and with an example in which the invention is applied to an existing installation in order to validate it:
- Figure 1 shows, in its unmodified form, a top-fired furnace of an SMR unit having two rows of 15 reforming tubes and three rows of burners.
- Figure 2 shows the same furnace fitted with a separating wall according to the invention, this wall replacing one tube of each row.

Table 1 below gives examples of furnace modifications and the results obtained in terms of minimum admissible capacity and corresponding consumption - these being calculated according to the position of the wall in the furnace, and to the maximum (design)capacity of 6500 Nm³/h of H₂ corresponding to the installation before modification.

Figure 1 depicts a schematic view of a top-fired reforming furnace of standard design showing various constituent components of said furnace that are useful for understanding the invention. The furnace has four walls made of refractory material, referenced 1 to 4: the two long walls 1 and 3 facing each other are called the side walls, while the two walls 2 and 4 facing each other are the end walls. There are 30 tubes 6 (only 20 tubes being represented), which are aligned in two rows of 15 (N = 30) and are parallel to the walls 1 and 3. The burners 7 are placed in the roof 8 of the furnace, in the form of rows parallel to the rows of tubes 6. The flue gases are discharged from 5 at the base of the wall 2.

Figure 2 depicts a schematic view of the same furnace modified according to the invention. The constituent components of the furnace that have remained unchanged keep the same references, the modified furnace differing from that in Figure 1 by the inclusion of the additional wall 9 made of refractory material. The wall 9 is placed perpendicular to the walls 1 and 3 and extends over the entire width of the furnace which it separates into two zones A and B. An access hatch provided in the bottom part of the wall 9 enables an operator to access the two zones A and B of the furnace. It is zone A provided with the flue gas discharge pipe that forms the reduced-capacity furnace according to the invention. This zone A has N_{A} tubes.Two tubes are omitted in order to fit the wall 9 - they may be removed, but they may also be at least partly incorporated into the wall. During operation of the reduced-capacity unit, the tubes remaining in zone B will not be in use and will therefore not be supplied.

Table I below gives examples of the invention applied to the above installation. It gives the results of calculations carried out for various modifications made on the installation of Figure 1.

The original installation (according to Figure 1) has a design capacity of 6500 Nm³/h of H₂ and a consumption of 4.5 kW/H₂ when it is operating under optimum conditions, i.e. at 100% of its capacity, in order to produce 6500 Nm³/h of H₂.

The admissible maximum loss of efficiency has been determined on the basis of the following considerations: assuming that the consumption of a standard unit of small capacity (i.e. 1000 to 1500 Nm³/h H₂) is around 5.23 kW/H₂, it follows that the use of the unit modified according to the invention may be considered to be economically acceptable provided that its consumption does not exceed about 5.3 kW/H₂.

Table I below therefore indicates the minimum admissible efficient capacity for various designs of zone A.

The first column defines the partition of the furnace and the equipment (number of tubes and burners) with which zone A is equipped after partition of the furnace.

The second column indicates the modifications required for correct operation of the reduced-capacity unit thus obtained. The required modifications are minor - they are easy to carry out and do not affect the economic benefit of the invention.

The third column indicates the minimum production that the modified furnace could deliver without excessive loss of efficiency. This minimum production thus defines the minimum admissible efficient capacity; it in fact gives rise to the energy consumption indicated in column 4. Said consumption is of the order of that defined above as being an economically acceptable consumption.

**Table I**

| Case | Required le modifications | Minimum admissib efficien t capacity Nm³/h H₂ | Energy consumpti on kW/Nm³ H₂ |
|---|---|---|---|
| Base case: no partitio n 30 tubes and Nb burners | No modification Burner adjustment | 2156 | 5.23 |
| 18 tubes and 9 burners | Reformer wall and tube insulation Process gas boiler tube plugging | 1185 | 5.21 |
| 16 tubes and 6 burners | Reformer wall and tube insulation Process gas boiler tube plugging | 1080 | 5.22 |
| 14 tubes and 6 burners | Reformer wall and tube insulation Process gas boiler tube plugging Burner operation adjustment | 958 | 5.24 |
| 14 tubes and 6 burners | Reformer wall and tube insulation Process gas boiler tube plugging Burner operation adjustment | 958 | 5.24 |
| 12 tubes and 6 burners | Reformer wall and tube insulation Process gas boiler tube plugging | 804 | 5.31 |
| 10 tubes and 6 burners | Reformer wall and tube insulation Process gas boiler tube plugging | 651 | 5.38 |

Consider therefore the energy performance of the installation operating according to its initial design, as indicated above: the unit was designed with a design (maximum) capacity of 6500 Nm³/h of hydrogen; the use of the reformer at 100% of its capacity corresponds to a natural gas consumption of 4.4 kW/H₂. The use of the same reformer for a production corresponding to 40% of its capacity (i.e. 2600 Nm³/h H₂) leads to a consumption of 5.2 kW/H₂, whereas its use at 10% of its capacity (650 Nm³/h H₂) would result in a consumption of 9 kW/H₂.

In the above example, the additional wall defines a zone A, the number of tubes of which varies from 10 to 18. By using the installation modified according to the invention as indicated above, it is possible to achieve a production ranging from 40% (2600 Nm³/h H₂) to 10% (650 Nm³/h H₂) of the initial design capacity for a consumption of 4.8 to 5.5 kW/H₂.

Another advantage of the invention is that, for start-up, the required utilities are lowered since the circulation rates are based on flow per reformer tube.

The choice of number of tubes depends on the desired capacity. Preferably, it will allow the production to be adjusted as required according to foreseeable changes in circumstances.

## Claims

1. Method for reducing the capacity of a steam reforming furnace in an installation producing a syngas by catalytic steam reforming of light hydrocarbons, comprising:
- at least one combustion chamber having at least four vertical walls 1 to 4 made of refractory material facing each other in pairs;
- N tubes forming at least one row of vertically aligned reforming tubes 6 between the two facing vertical side walls 1 and 3, said tubes being filled with reforming catalyst and being capable of making a mixture containing the hydrocarbon feed and steam flow from the top down so as to recover a raw syngas at the bottom of the tubes;
- burners 7, said burners being supplied with fuel and with oxidizer; and
- at least one outlet duct 5 for discharging the gases resulting from said combustion,
**characterized in that** an additional wall 9 made of refractory material perpendicular to the side walls 1 and 3 is installed so as to separate the combustion chamber into two zones A and B, the zone A of which is provided with:
- N_{A} reforming tubes in at least one row of reforming tubes, where N_{A} < N;
- at least some of the burners 7; and
- at least one gas discharge pipe outlet 5, and said zone A has a reduced syngas production capacity.

2. Method according to Claim 1, **characterized in that** the additional wall occupies the place of one tube per row.

3. Method according to Claim 2, **characterized in that** one tube per row is removed in order to replace it with supports capable of adapting said additional wall.

4. Method according to Claim 2, **characterized in that** the additional wall uses at least some of the tubes for which it substitutes as support capable of holding it in place.

5. Syngas production installation comprising a furnace for catalytic steam reforming of light hydrocarbons for the production of syngas and the capacity C of which is determined for a given production P of an **end product,** comprising:
- at least one combustion chamber having at least four vertical walls 1 to 4 made of refractory material facing one another in pairs;
- N tubes forming at least one row of vertically aligned reforming tubes 6 between the two facing vertical side walls 1 and 3, which tubes are filled with reforming catalyst and are capable of making a mixture containing the hydrocarbon feed and steam flow from the top down so as to recover a raw syngas at the bottom of the tubes;
- burners 7, said burners being supplied with fuel and with oxidizer;
- at least one outlet duct 5 for discharging the gases coming from said combustion,
**characterized in that** it has, in the combustion chamber, an additional wall 9 made of refractory material perpendicular to the side walls 1 and 3 so as to separate the combustion chamber into two zones A and B, the zone A of which is provided with:
- N_{A} reforming tubes in at least one row of reforming tubes, where N_{A} < N;
- at least some burners; and
- at least one gas discharge outlet duct 5, so that, by using said zone A alone as reforming furnace, the production capacity of the installation is reduced to a capacity CA less than the capacity C.

6. Installation according to Claim 5, **characterized in that** the number of tubes N_{A} is between 3N/5 and N/3.

7. Use of a reduced-capacity installation according to Claim 5 or Claim 6 for reduced production of an end product P from a reduced hydrocarbon feed HC.
